# DEMANDE DE BREVET EUROPEEN

(11) **EP 2 918 981 A1**
(43) Date de publication de la demande: **16.09.2015**
(21) Numéro de dépôt: 15156664.3
(22) Date de dépôt: 26.02.2015
(51) Int. Cl.: G01F 23/72, G01F 23/76, G01F 23/02, G01F 23/30

(54) **Dispositif d'indication du niveau de remplissage d'un conteneur**

(30) Priorité: 11.03.2014 FR 1451995
(71) Demandeur: COMMISSARIAT A L'ENERGIE ATOMIQUE ET AUX ENERGIES ALTERNATIVES, 75015 Paris (FR)
(72) Inventeur: Boiseau, Sébastien, 38130 Echirolles (FR); Despesse, Ghislain, 38340 Voreppe (FR); Mainguet, Jean-François, 38100 Grenoble (FR); Paleologue, Alexandre, 73100 Brison Saint Innocent (FR)
(74) Mandataire: Thibon, Laurent

(57) **Abrégé**

L'invention concerne un dispositif (110) d'indication du niveau de remplissage d'un conteneur (101), comprenant : un premier élément mobile (111) situé à l'intérieur du conteneur (101) et adapté à se déplacer le long d'une paroi (109) du conteneur lorsque le niveau de remplissage du conteneur (101) varie ; une enceinte (113) contenant un liquide ou un gel (117), située à l'extérieur du conteneur (101) du côté de ladite paroi (109) opposé au premier élément (111) ; et un deuxième élément mobile (115) situé à l'intérieur de l'enceinte (113) et plongé dans ledit liquide ou gel (117), le deuxième élément (115) étant couplé magnétiquement au premier élément (111) et étant adapté à se déplacer dans l'enceinte (113) le long de ladite paroi (109) en suivant les déplacements du premier élément (111).

## Description

### Domaine

La présente demande concerne un dispositif d'indication du niveau de remplissage d'un conteneur.

### Exposé de l'art antérieur

Diverses solutions permettant de mesurer le niveau d'un contenu dans un récipient ou conteneur ont été proposées. Ces solutions présentent toutefois toutes leurs inconvénients propres. Il existe un besoin pour un dispositif d'indication de niveau palliant tout ou partie de ces inconvénients.

### Résumé

Ainsi, un mode de réalisation prévoit un dispositif d'indication du niveau de remplissage d'un conteneur, comprenant : un premier élément mobile situé à l'intérieur du conteneur et adapté à se déplacer le long d'une paroi du conteneur lorsque le niveau de remplissage du conteneur varie ; une enceinte contenant un liquide ou un gel, située à l'extérieur du conteneur du côté de ladite paroi opposé au premier élément ; et un deuxième élément mobile situé à l'intérieur de l'enceinte et plongé dans ledit liquide ou gel, le deuxième élément étant couplé magnétiquement au premier élément et étant adapté à se déplacer dans l'enceinte le long de ladite paroi en suivant les déplacements du premier élément.

Selon un mode de réalisation, l'un des premier et deuxième éléments mobiles comprend un aimant permanent, l'autre élément comprenant au moins une partie en un matériau ferromagnétique.

Selon un mode de réalisation, l'aimant permanent est en un matériau choisi parmi le NdFeB, le AlNiCo et le SmCo, et ledit matériau ferromagnétique est choisi parmi le NdFeB, le fer, le nickel et le cobalt.

Selon un mode de réalisation, la densité moyenne du deuxième élément est égale à la densité dudit liquide ou gel à plus ou moins 0,5.

Selon un mode de réalisation, la densité moyenne du deuxième élément est égale à la densité dudit liquide ou gel à plus ou moins 0,1.

Selon un mode de réalisation, le deuxième élément comprend une première partie en un matériau ferromagnétique de densité supérieure à celle dudit liquide ou gel et au moins une deuxième partie en un matériau non ferromagnétique de densité inférieure à celle dudit liquide ou gel.

Selon un mode de réalisation, la première partie comprend au moins une bille ferromagnétique et la deuxième partie comprend un enrobage de la bille par un matériau non ferromagnétique, par exemple du plastique.

Selon un mode de réalisation, la viscosité du liquide ou gel est comprise entre 0,1 et 100 Pa.s.

Selon un mode de réalisation, le deuxième élément mobile comprend une pluralité de microbilles.

Selon un mode de réalisation, le deuxième élément mobile comprend un ferrofluide.

Selon un mode de réalisation, l'enceinte comprend une paroi présentant des structurations permettant de stabiliser le deuxième élément mobile dans un nombre discret de positions.

Un autre mode de réalisation prévoit un système comprenant un conteneur opaque, et un dispositif d'indication du niveau de remplissage de ce conteneur du type susmentionné.

Un autre mode de réalisation prévoit un système comprenant un chargeur d'arme à feu comportant un conteneur à munitions, et un dispositif d'indication du niveau de remplissage de ce conteneur du type susmentionné.

Un autre mode de réalisation prévoit un système comprenant un conteneur ou réservoir de liquide, notamment de liquide inflammable ou explosif, et un dispositif d'indication du niveau de remplissage de ce réservoir du type susmentionné.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe représentant de façon schématique un exemple d'un mode de réalisation d'un dispositif d'indication du niveau de remplissage d'un chargeur d'arme à feu ;
les figures 2A et 2B sont des vues en coupe illustrant schématiquement des exemples de réalisation d'un élément mobile d'un dispositif de mesure de niveau du type décrit en relation avec la figure 1 ;
les figures 3, 4, 5 et 6 sont des vues en coupe représentant de façon schématique des variantes de réalisation du dispositif d'indication de niveau de la figure 1 ; et
la figure 7 est une vue en coupe représentant de façon schématique un exemple d'un mode de réalisation d'un dispositif d'indication du niveau de remplissage d'un réservoir de liquide.

### Description détaillée

Par souci de clarté, de mêmes éléments ont été désignés par de mêmes références aux différentes figures et, de plus, les diverses figures ne sont pas tracées à l'échelle. En outre, dans la suite de la description, des références directionnelles telles que "vertical", "horizontal", "latéral", "en dessous", "au-dessus", "supérieur", "inférieur", etc., s'appliquent à des dispositifs orientés de la façon illustrée dans les vues en coupe correspondantes, étant entendu que, en fonctionnement, ces dispositifs peuvent être orientés différemment.

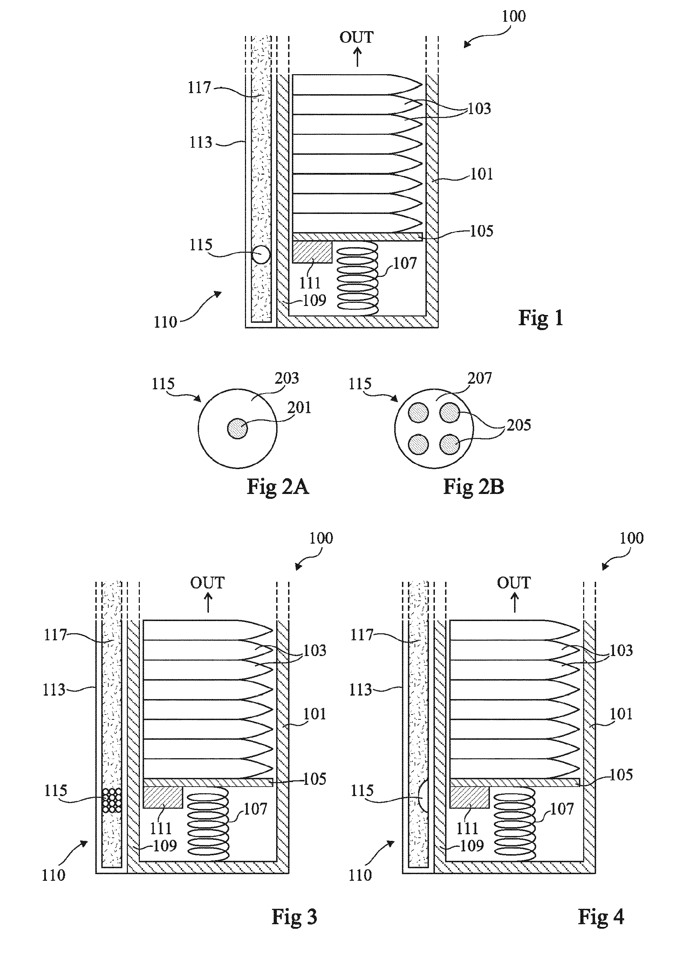

La figure 1 est une vue en coupe représentant de façon schématique et partielle un exemple d'un chargeur d'arme à feu 100, et un exemple d'un mode de réalisation d'un dispositif 110 d'indication du niveau de remplissage du chargeur 100, c'est-à-dire du nombre de balles ou munitions contenues dans le chargeur 100.

Dans cet exemple, le chargeur 100 comprend un conteneur 101, par exemple de forme générale parallélépipédique, destiné à contenir une pluralité de balles 103. Le conteneur 101 peut être opaque ou transparent. De plus, le conteneur peut être en un matériau ferromagnétique ou en un matériau non ferromagnétique. Le conteneur 101 est par exemple en métal ou en plastique. Le conteneur 101 peut comprendre une ouverture de sortie OUT par laquelle les balles 103 peuvent être extraites, par exemple pour être présentées à un dispositif de mise à feu (non représenté). Dans l'exemple de la figure 1, l'ouverture de sortie OUT du chargeur est formée dans une paroi supérieure (non représentée) du conteneur 101. Dans cet exemple, le chargeur 100 comprend en outre, à l'intérieur du conteneur 101, une pièce mobile 105 que l'on appellera ici socle, située du côté des balles 103 opposé à l'ouverture de sortie OUT. Le socle 105 est par exemple constitué par une plaque approximativement parallèle à la paroi du conteneur comprenant l'ouverture de sortie OUT. Le socle 105 est par exemple en métal ou en plastique. Le chargeur 100 comprend en outre un ressort 107 comprimé entre une face du socle 105 opposée aux balles 103 et une paroi du conteneur 101 opposée à l'ouverture de sortie OUT. En fonctionnement, chaque fois qu'une balle 103 est extraite du chargeur 100, le ressort 107 et le socle 105 poussent les balles restantes en direction de l'ouverture de sortie du chargeur, de façon à toujours présenter une nouvelle balle en sortie du chargeur jusqu'à ce que la dernière balle ait été utilisée. Ainsi, la position du socle 105 dans le conteneur 101 varie en fonction du niveau de remplissage du chargeur.

Le dispositif d'indication de niveau 110 comprend un premier élément 111 mobile par rapport au conteneur 101, disposé à l'intérieur du conteneur 101. Dans cet exemple, l'élément mobile 111 est fixé à la face inférieure du socle 105, en contact ou à faible distance d'une paroi latérale 109 du conteneur 101. A titre d'exemple, l'élément mobile 111 est disposé à une distance comprise entre 0,01 et 5 mm de la paroi 109. Dans cet exemple, l'élément mobile 111 comprend un aimant permanent, par exemple de type NdFeB (Néodyme Fer Bore), de type AlNiCo (Aluminium Nickel Cobalt), ou de type SmCo (Samarium Cobalt).

Le dispositif d'indication de niveau 110 comprend en outre une enceinte de guidage 113 située à l'extérieur du conteneur 101, du côté de la paroi 109 opposé à l'élément mobile 111. Dans cet exemple, l'enceinte 113 comprend une paroi accolée à la paroi 109, et s'étendant sensiblement sur toute la hauteur de la paroi 109.

Le dispositif 110 comprend de plus un deuxième élément 115 mobile par rapport au conteneur 101, disposé dans l'enceinte de guidage 113. Dans cet exemple, le deuxième élément mobile 115 comprend au moins une partie en un matériau ferromagnétique, par exemple du NdFeB, du fer, du nickel ou du cobalt. Dans l'exemple représenté, le deuxième élément mobile 115 a la forme d'une bille. L'élément mobile 115 peut toutefois prendre d'autres formes.

Les éléments mobiles 111 et 115 du dispositif 110 sont couplés magnétiquement l'un à l'autre à travers la paroi 109, de façon qu'un déplacement de l'élément 111 le long de la face intérieure de la paroi 109 entraine un déplacement correspondant de l'élément 115 le long de la face extérieure de la paroi 109. En d'autres termes, la force d'attraction entre les éléments 111 et 115 est telle que l'élément mobile extérieur 115 suit les déplacements de l'élément mobile intérieur 111 dans la mesure permise par l'enceinte de guidage 113. A titre d'exemple non limitatif, l'enceinte de guidage 113 à la forme générale d'un tube cylindrique de diamètre légèrement supérieur au diamètre de l'élément 115, permettant des déplacements verticaux de l'élément 115 et empêchant tout déplacement latéral significatif de l'élément 115. Les modes de réalisation décrits ne se limitent toutefois pas à ce cas particulier. Les parois intérieures de l'enceinte 113 peuvent optionnellement comporter un revêtement, par exemple de type TEFLON, permettant de limiter les frottements avec l'élément mobile 115.

Le fonctionnement du dispositif d'indication de niveau 110 de la figure 1 est le suivant. Lorsque le niveau de remplissage du chargeur 100 varie, le socle 105 du chargeur se déplace verticalement le long de la paroi 109 en entraînant l'élément mobile interne 111. Ce déplacement entraine, de l'autre côté de la paroi 109, un déplacement correspondant de l'élément mobile externe 115. L'élément mobile externe 115 indique alors le niveau de remplissage du chargeur 100. En effet, la position de l'élément 115 dans l'élément de guidage 113 permet de connaître la position du socle 105 dans le conteneur 101 et donc la quantité de balles restant dans le chargeur.

A titre d'exemple, les parois de l'enceinte 113 sont transparentes, ce qui permet à l'utilisateur de pouvoir visualiser directement la position de l'élément 115 et donc le niveau de remplissage du chargeur.

De plus, que l'élément mobile 115 soit ou non directement visible par l'utilisateur à travers les parois de l'enceinte 113, le dispositif 110 peut optionnellement comprendre un système complémentaire de lecture de la position de l'élément mobile extérieur 115. A titre d'exemple, un tel système de lecture peut comprendre des électrodes placées sur les parois de l'enceinte 113, permettant une lecture capacitive ou résistive de la position de l'élément 115. A titre de variante, le système de lecture complémentaire est adapté à lire optiquement la position de l'élément 115 dans l'enceinte 113. La prévision d'un tel système de lecture complémentaire permet par exemple de transmettre l'information de niveau de remplissage du conteneur 101 à un système d'affichage ou de contrôle distant.

Dans un mode de réalisation préféré, l'enceinte de guidage 113 est remplie d'un liquide ou d'un gel 117, dans lequel l'élément mobile 115 est entièrement plongé et se déplace lorsque le niveau de remplissage du conteneur 101 varie. La présence du liquide ou gel 117 permet avantageusement de rendre le dispositif 110 plus robuste aux chocs et aux vibrations. En particulier, la présence du liquide ou gel 117 filtre les éventuels chocs ou vibrations subis par le chargeur 100 et permet de réduire les risques de décrochage de l'élément mobile 115 par rapport à l'élément mobile 111 en cas de choc. Un tel décrochage rendrait en effet le dispositif 110 au moins temporairement inutilisable.

Dans un mode de réalisation préféré, l'enceinte 113 contient un liquide 117, et l'élément mobile extérieur 115 du dispositif 110 est tel que sa densité moyenne d115 est proche de la densité d117 du liquide 117, par exemple égale à plus ou moins 0,5 et de préférence à plus ou moins 0,1 à la densité du liquide 117. Ceci permet de rendre le dispositif 110 particulièrement robuste aux chocs et vibrations. En effet, ceci permet que la poussée d'Archimède subie par l'élément 115, égale à pe*d117*V115*g, où pe, V115 et g désignent respectivement la masse volumique de l'eau, le volume de l'élément 115 et l'accélération de la pesanteur, compense approximativement son poids, égal à pe*d115*V115*g. Ainsi, en cas de décrochage accidentel de l'élément mobile 115 suite à un choc violent, l'élément 115 tend à rester au voisinage de la position qu'il occupait juste avant le choc, et ne sort donc pas du champ d'attraction de l'élément 111. Il en résulte que le couplage mécanique entre les éléments mobiles 111 et 115 se reforme immédiatement après le choc, et que le dispositif 110 reste donc utilisable.

Pour améliorer la robustesse aux chocs du dispositif 110, le liquide ou gel 117 remplissant l'enceinte 113 peut de plus présenter une viscosité relativement élevée, par exemple comprise entre 0,1 Pa.s et 100 Pa.s à température ambiante.

A titre d'exemple non limitatif, le liquide ou gel 117 remplissant l'enceinte 113 peut être de l'eau, une huile, un liquide coloré, un colloïde, du bromoforme, du sodium métatungstate, etc.

On notera que les matériaux ferromagnétiques usuels ont typiquement une densité supérieure à celle de la plupart des liquides connus. Ainsi, l'élément mobile 115 est de préférence un élément composite, comportant plusieurs matériaux de densités différentes, choisis de façon que la densité moyenne de l'élément 115 soit proche de celle du liquide 117. A titre d'exemple, l'élément 115 comprend au moins une partie en un matériau ferromagnétique de densité supérieure à celle du liquide 117, et au moins une partie en un matériau non ferromagnétique de densité inférieure à celle du liquide 117, par exemple du plastique.

Les figures 2A et 2B illustrent deux exemples de réalisation d'un tel élément mobile composite.

Dans l'exemple de la figure 2A, l'élément 115 comprend une bille centrale 201 en un matériau ferromagnétique, et un enrobage extérieur 203 en un matériau de densité inférieure à celle de la bille 201.

Dans l'exemple de la figure 2B, l'élément 115 comprend plusieurs billes ferromagnétiques 205 noyées dans une boule 207 en un matériau de densité inférieure.

A partir des principes de base décrits ci-dessus en relation avec les figures 1, 2A et 2B, de nombreuses variantes de réalisation peuvent être envisagées. Des exemples non limitatifs de telles variantes sont décrits ci-après en relation avec les figures 3, 4, 5 et 6.

Les figures 3, 4, 5 et 6 sont des vues en coupe, dans le même plan que la figure 1, du chargeur 100 et du dispositif d'indication de niveau 110 du type décrit en relation avec la figure 1. Dans ces figures, le chargeur 100 est identique ou similaire au chargeur de la figure 1. De plus, le dispositif d'indication de niveau 110 comprend des éléments communs avec le dispositif d'indication de niveau de la figure 1. Dans la suite, seules les différences par rapport au dispositif de la figure 1 seront détaillées.

La figure 3 illustre un exemple de réalisation dans lequel l'élément 115 est constitué d'une pluralité de microbilles, par exemple de diamètre inférieur à 1 mm, chacune de ces microbilles comportant au moins une partie en un matériau ferromagnétique. Ce mode de réalisation permet d'augmenter la robustesse aux chocs du dispositif 110, notamment en augmentant la surface de frottement entre l'élément 115 et le liquide ou gel 117, et en exploitant les propriétés ferromagnétiques des microbilles. En particulier, la microbille la plus proche de l'élément 111 sera la plus fortement magnétisée et attirera ainsi les autres microbilles dans son voisinage, c'est-à-dire en face de l'élément 111, évitant ainsi que les microbilles ne se dispersent dans le liquide ou gel 117.

La figure 4 illustre un exemple de réalisation dans lequel l'élément 115 est constitué par une ou plusieurs gouttes d'un ferrofluide, c'est-à-dire une suspension colloïdale comportant des particules ferromagnétiques de petites dimensions, par exemple de diamètre compris entre 10 nm et 1 µm, ou toute autre suspension colloïdale adaptée à réagir à un champ magnétique, par exemple par un changement de couleur, de forme, etc. L'utilisation d'un ferrofluide pour réaliser l'élément mobile 115 permet là encore d'augmenter la robustesse aux chocs du dispositif, pour des raisons similaires à celles de l'exemple de la figure 3.

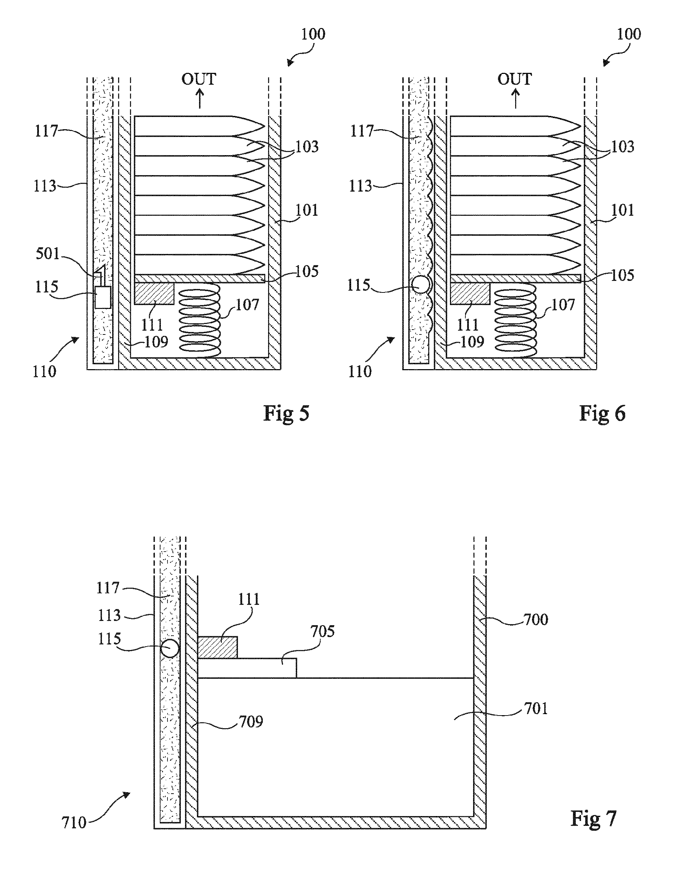

La figure 5 illustre le fait que l'élément mobile 115 n'a pas nécessairement la forme d'une bille, mais peut avoir toute autre forme lui permettant de se déplacer dans l'enceinte 113 lorsque le niveau de remplissage du conteneur 101 varie. Dans l'exemple de la figure 5, l'élément 115 a la forme d'un cylindre. De plus, quelle que soit la forme de l'élément 115, un curseur d'indication de niveau 501 peut être fixé à l'élément 115. Le curseur 501 peut notamment permettre de compenser un écart éventuel entre la position de l'élément mobile 111 situé dans le conteneur 101 et le niveau effectif du contenu dans le conteneur. Dans l'exemple particulier d'un dispositif d'indication du niveau de remplissage d'un chargeur d'arme à feu, le curseur 501 peut par exemple pointer sur la position de la dernière balle du chargeur, ce qui permet à l'utilisateur de pouvoir visualiser à tout instant la position de la dernière balle du chargeur.

La figure 6 illustre une variante de réalisation dans laquelle la paroi intérieure de l'enceinte 113 le long de laquelle se déplace l'élément mobile 115 présente des structurations permettant de stabiliser l'élément 115 dans un nombre discret de positions. Dans l'exemple de la figure 6, l'élément 115 a la forme d'une bille, et la paroi intérieure de l'enceinte 113 le long de laquelle se déplace l'élément mobile 115 présente une pluralité de creux ou crans dans lesquels peut venir se loger l'élément 115. Dans cet exemple, chaque fois qu'une balle 103 est extraite du chargeur 100, l'élément 115 se déplace d'un cran dans l'enceinte 113.

A partir des principes de base décrits ci-dessus en relation avec les figures 1 à 6, des dispositifs d'indication du niveau de remplissage d'un conteneur peuvent être réalisés pour d'autres types de conteneurs et d'autres types de contenus que ceux décrits en relation avec les figures 1 à 6. En particulier, la figure 7 illustre, à titre d'exemple non limitatif, un dispositif d'indication du niveau d'un liquide dans un réservoir, ce dispositif fonctionnant de façon similaire à ce qui a été décrit en relation avec les figures 1 à 6.

La figure 7 est une vue en coupe représentant de façon schématique et partielle un exemple d'un réservoir 700 contenant un liquide 701, par exemple un réservoir de carburant, et un exemple d'un mode de réalisation d'un dispositif 710 d'indication du niveau de remplissage du réservoir 700. Comme dans l'exemple précédent, le réservoir 700 peut être opaque ou transparent, et peut être en un matériau ferromagnétique ou non ferromagnétique.

Dans cet exemple, le dispositif d'indication de niveau 710 comprend un flotteur 705 disposé à l'intérieur du réservoir 700 dans le liquide 701. Le flotteur 705 est situé à la surface du liquide 701, et la position verticale du flotteur 705 suit les variations de niveau du liquide 701. A titre d'exemple, le flotteur peut être monté sur un rail ou sur une glissière verticale de façon à rester en permanence à proximité d'une paroi latérale 709 du réservoir 700.

Le dispositif 710 comprend en outre les mêmes éléments que le dispositif 110 des figures 1 à 6, à savoir un premier élément mobile 111 situé à l'intérieur du réservoir 700, une enceinte de guidage 113 située à l'extérieur du réservoir 700, et un deuxième élément mobile 115 couplé magnétiquement au premier élément 111, situé à l'intérieur de l'enceinte 113.

Dans l'exemple de la figure 7, l'élément 111 est fixé sur le flotteur 705, par exemple sur la face supérieure du flotteur 705, à faible distance de la paroi 709 du réservoir.

Lorsque le niveau de remplissage du réservoir 700 varie, le flotteur 705 se déplace verticalement le long de la paroi 709 en entrainant l'élément mobile interne 111. Ce déplacement entraine, de l'autre côté de la paroi 709, un déplacement correspondant de l'élément mobile externe 115. La position de l'élément mobile externe 115 dans l'enceinte indique alors le niveau de remplissage du réservoir 700.

Les diverses variantes et options de réalisation décrites en relation avec les figures 1 à 6 sont compatibles avec l'exemple de réalisation de la figure 7.

Un avantage des dispositifs d'indication de niveau décrits dans la présente demande est qu'ils permettent d'indiquer le niveau de remplissage d'un conteneur quelles que soient les propriétés des parois du conteneur (opaques, transparentes, ferromagnétiques ou non, etc.). En particulier, les modes de réalisation décrits permettent d'indiquer visuellement le niveau de remplissage d'un conteneur même lorsque les parois du conteneur sont opaques.

Un avantage des dispositifs d'indication de niveau décrits dans la présente demande est qu'ils sont particulièrement simples à mettre en oeuvre et peuvent s'adapter à de nombreux types de conteneurs et de contenus.

Un autre avantage des modes de réalisation décrits est qu'ils peuvent fonctionner sans aucun apport d'énergie électrique. Ceci présente un intérêt tout particulier dans le cas de conteneurs destinés à contenir des produits inflammables ou explosifs.

En outre, un avantage des dispositifs d'indication décrits est qu'ils ne comprennent aucun élément actif - c'est-à-dire nécessitant une alimentation électrique - à l'intérieur du conteneur. Ceci permet de simplifier l'installation du dispositif, et d'éviter des risques d'inflammation ou d'explosion du contenu si ce dernier est inflammable ou explosif.

Des modes de réalisation particuliers ont été décrits. Diverses variantes et modifications apparaîtront à l'homme de l'art.

En particulier, dans les exemples décrits ci-dessus, l'élément mobile 111 situé à l'intérieur du conteneur dont on souhaite déterminer le niveau de remplissage comprend un aimant permanent, et l'élément mobile 115 situé à l'extérieur du conteneur comprend une partie en un matériau ferromagnétique. L'homme de l'art saura modifier les dispositifs décrits et obtenir le fonctionnement recherché en plaçant l'aimant permanent à l'extérieur du conteneur et l'élément ferromagnétique à l'intérieur.

Par ailleurs, les modes de réalisation ne se limitent pas aux exemples de dimensions et de matériaux mentionnés ci-dessus. L'homme de l'art saura obtenir le fonctionnement recherché en utilisant d'autres matériaux et des dimensionnements différents.

En outre, dans les exemples décrits ci-dessus, les éléments mobiles 111 et 115 se déplacent le long d'une paroi du conteneur selon une seule direction. Les modes de réalisation décrits ne se limitent toutefois pas à ce cas particulier. Le cas échéant, en fonction du type de contenu et du type d'indication de niveau que l'on souhaite fournir, on peut prévoir un dispositif d'indication de niveau dans lequel les éléments 111 et 115 peuvent se déplacer le long d'une paroi du conteneur selon au moins deux directions. L'enceinte de guidage 113 pourra alors être adaptée en conséquence.

## Revendications

1. Dispositif (110 ; 710) d'indication du niveau de remplissage d'un conteneur (101 ; 700), comprenant :
un premier élément mobile (111) situé à l'intérieur du conteneur (101 ; 700) et adapté à se déplacer le long d'une paroi (109 ; 709) du conteneur lorsque le niveau de remplissage du conteneur (101 ; 700) varie ;
une enceinte (113) contenant un liquide ou un gel (117), située à l'extérieur du conteneur (101 ; 700) du côté de ladite paroi (109 ; 709) opposé au premier élément (111) ; et
un deuxième élément mobile (115) situé à l'intérieur de l'enceinte (113) et plongé dans ledit liquide ou gel (117), le deuxième élément (115) étant couplé magnétiquement au premier élément (111) et étant adapté à se déplacer dans l'enceinte (113) le long de ladite paroi (109 ; 709) en suivant les déplacements du premier élément (111).

2. Dispositif (110 ; 710) selon la revendication 1, dans lequel l'un des premier (111) et deuxième (115) éléments mobiles comprend un aimant permanent, l'autre élément comprenant au moins une partie en un matériau ferromagnétique.

3. Dispositif (110 ; 710) selon la revendication 2, dans lequel ledit aimant permanent est en un matériau choisi parmi le NdFeB, le AlNiCo et le SmCo, et ledit matériau ferromagnétique est choisi parmi le NdFeB, le fer, le nickel et le cobalt.

4. Dispositif (110 ; 710) selon l'une quelconque des revendications 1 à 3, dans lequel la densité moyenne du deuxième élément (115) est égale à la densité dudit liquide ou gel (117) à plus ou moins 0,5.

5. Dispositif (110 ; 710) selon l'une quelconque des revendications 1 à 4, dans lequel la densité moyenne du deuxième élément (115) est égale à la densité dudit liquide ou gel (117) à plus ou moins 0,1.

6. Dispositif (110 ; 710) selon l'une quelconque des revendications 1 à 5, dans lequel le deuxième élément (115) comprend une première partie (201 ; 205) en un matériau ferromagnétique de densité supérieure à celle dudit liquide ou gel (117) et au moins une deuxième partie (203 ; 207) en un matériau non ferromagnétique de densité inférieure à celle dudit liquide ou gel (117).

7. Dispositif (110 ; 710) selon la revendication 6, dans lequel ladite première partie (201 ; 205) comprend au moins une bille ferromagnétique et ladite deuxième partie comprend un enrobage de ladite au moins une bille par un matériau non ferromagnétique, par exemple du plastique.

8. Dispositif (110 ; 710) selon l'une quelconque des revendications 1 à 7, dans lequel la viscosité dudit liquide ou gel (117) est comprise entre 0,1 et 100 Pa.s.

9. Dispositif (110 ; 710) selon l'une quelconque des revendications 1 à 8, dans lequel le deuxième élément mobile (115) comprend une pluralité de microbilles.

10. Dispositif (110 ; 710) selon l'une quelconque des revendications 1 à 8, dans lequel le deuxième élément mobile (115) comprend un ferrofluide.

11. Dispositif (110 ; 710) selon l'une quelconque des revendications 1 à 10, dans lequel l'enceinte (113) comprend une paroi présentant des structurations permettant de stabiliser le deuxième élément mobile (115) dans un nombre discret de positions.

12. Système comprenant un conteneur opaque (101 ; 700), et un dispositif (110 ; 710) d'indication du niveau de remplissage de ce conteneur selon l'une quelconque des revendications 1 à 11.

13. Système comprenant un chargeur d'arme à feu (100) comportant un conteneur à munitions (101), et un dispositif (110) d'indication du niveau de remplissage de ce conteneur selon l'une quelconque des revendications 1 à 11.

14. Système comprenant un conteneur ou réservoir (700) de liquide, notamment de liquide inflammable ou explosif, et un dispositif (710) d'indication du niveau de remplissage de ce réservoir selon l'une quelconque des revendications 1 à 11.
